# EUROPEAN PATENT APPLICATION

(11) **EP 1 748 652 A2**
(43) Date of publication of application: **31.01.2007**
(21) Application number: 06117894.3
(22) Date of filing: 26.07.2006
(51) Int. Cl.: H04N 5/77

(54) **Recording device and method, and image capture device**

(30) Priority: 27.07.2005 JP 2005217117
(71) Applicant: SONY CORPORATION, Tokyo (JP)
(72) Inventor: Harada, Takeshi, Shinagawa-ku Tokyo (JP); Tabuchi, Tatsuhito, Shinagawa-ku Tokyo (JP); Saitou, Yuji, Shinagawa-ku Tokyo (JP)
(74) Representative: Thévenet, Jean-Bruno

(57) **Abstract**

A recording device (1) that includes: a main image data acquisition section (11) acquiring main image data in real time; a sub image data generation section (13b) generating sub image data, which can be recorded on a recording medium together with the main image data based on a predetermined rule using a predetermined format, and is the image data defined to be displayable through overlay on a display image as a reproduction result of the main image data; an associated information acquisition section (13b) acquiring associated information of predetermined contents when the main image data is acquired; a sub image data generation control section exercising control over the sub image data generation section to generate the sub image data by which the contents of the associated information are displayed in a predetermined layout; and a recording section (15) recording on the recording medium, in accordance with the format, the main image data and the sub image data.

## Description

### BACKGROUND OF THE INVENTION

### Field of the Invention

The present invention relates to a recoding device and method for image data recording, and to an image capture device that records images acquired as image data by image capture.

### Description of the Related Art

The widely used image capture devices for consumer use, e.g., portable video cameras, record associated information together with data about captured images for users' convenience. The associated information is about the image capture, including the date and time of the image capture, and information about various settings made to the image capture device, e.g., exposure.

The image capture devices with a recording medium of DVD (Digital Versatile Disc), e.g., video cameras, are recently appearing on the market, and are becoming popular.

For recording of captured images (and captured audio) with a recording medium of DVD, as is well known, amedia format, a so-calledDVD format, including DVD-Video, DVD-VR (Video Recording), and others is used. For recording video and audio data with such a DVD format, used is a system format called MPEG-PS (Program Stream) . The MPEG-PS is a standard for compression encoding by MPEG (Motion Picture Experts Group). With the MPEG-PS, generated is an encoding stream on which synchronized data, e.g. , image data and audio data, is multiplexed, and data of the resulting encoding stream is recorded on a recording medium.

With the DVD format using such MPEG-PS, there is no definition of how to multiplex the associated information about image capture on the stream. The capability of recording and reproducing the associated information about image capture is deemed necessary in consideration of users' convenience. There is thus a demand for such a capability of recording and reproducing the associated information even with the DVD format.

In order to meet such a demand, Patent Document 1 (JP-A-2004-312663) describes the configuration enabling the recording of associated information together with data about captured images presumably with the DVD format, i.e., DVD-Video and DVD-VR. With the configuration, a specific pack in one VOBU (Video Object Unit) is used for storage of the associated information (additional information) so that the associated information can be recorded with the data about captured images.

For reproduction after recording as such, the contents of the associated information are combined with the captured images, and output for display. The contents of the associated information are in the form of letters, symbols (patterns), or others whatever the users can acknowledge. Such display of the associated information helps the users check the date and time when the images are captured, or the various settings made at the time of image capture. In the technology of Patent Document 1, the associated information is stored in any pack specified by the DVD format, and in this respect, consideration is given to preclude the possibility of failure of the DVD format.

### SUMMARY OF THE INVENTION

The issue here is that, however, the technology of recording and reproducing the associated information in the previous image capture devices including the one in Patent Document 1, for example, is the extension function of the standard DVD format. In other words, the function of recording and reproducing the associated information in the image capture devices is not always uniformly standardized, i.e., the algorithm varies depending on the device type and the vendor, and is called a vendor dependent standard, for example. This causes an inconvenience of not being able to reproduce and output the associated information from data recorded on a recording medium in the following case. That is, exemplified here is the case of reproducing a recording medium, e.g., DVD, recorded with images captured by an image capture device. If any other image capture device or a general DVD player assigned for DVD reproduction is not implemented with the algorithm for reproducing the associated information from the data recorded on the DVD, the associated information cannot be reproduced and output.

Because the associated information is often important for the users, it is considered preferable if the associated information is reproduced with maximum versatility if possible.

In consideration of the problems described above, an embodiment of the invention is directed to a recording device that includes: amain image data acquisition section that acquires main image data in real time; a sub image data generation section that generates sub image data, which can be recorded on a recording medium together with the main image data based on a predetermined rule using a predetermined format provided for recording of image data on the recording medium, and is the image data defined to be displayable through overlay on a display image as a reproduction result of the main image data; associated information acquisition section that acquires associated information of predetermined contents when the main image data acquisition section is acquiring the main image data; a sub image data generation control section that exercises control over the sub image data generation section to generate the sub image data by which the contents of the associated information acquired by the associated information acquisition section are displayed in a predetermined layout; and a recording section that records, in accordance with the format, the main image data acquired by the main image data acquisition section and the sub image data generated by the sub image data generation section on the recording medium.

Another embodiment of the invention is directed to an image capture device that includes: a main image data acquisition section that acquires, as main image data, information about an image captured by image capture; a sub image data generation section that generates sub image data, which can be recorded on a recording medium together with the main image data based on a predetermined rule using a predetermined format provided for recording of data on the recording medium, and is image data defined to be displayable through overlay on a display image as a reproduction result of the main image data; associated information acquisition section that acquires associated information of predetermined contents when the main image data acquisition section is acquiring the main image data; a sub image data generation control section that exercises control over the sub image data generation section to generate the sub image data by which the contents of the associated information acquired by the associated information acquisition section are displayed in a predetermined layout; and a recording section that records, in accordance with the format, the main image data acquired by the main image data acquisition section and the sub image data generated by the sub image data generation section on the recording medium.

With the above configurations, in the format of the embodiments of the invention, i.e., the format for a recording medium for data recording and reproduction, the main image data and the sub image data are recorded on a recording medium with any predetermined logic construction. Here, the sub image data is defined to be displayed through overlay on an image, which is a reproduction result of the main image data.

With such a format, in the embodiments of the invention, the main image data is acquired in real time, and the sub image data is so generated as to include therein the contents of the associated information, which is acquired in response to the acquisition of the main image data. This enables, in the recording device in the embodiment of the invention, to make a recording on a recording medium of the data carrying therein the sub image data representing the contents of the associated information together with the main image data.

With the format, the sub image data is defined to be displayed through overlay on the main image data. Accordingly, if a reproduction device capable of reproducing a recording medium while conforming to the format of the embodiment of the invention is used to reproduce a recording medium recorded with data by the recording device of the embodiments of the invention, the associated information can be spontaneously displayed and output by the function of reproducing and outputting the image of the sub image data through overlay on the image of the main image data.

As such, according to the embodiments of the invention, if with a reproduction device conforming to the format of the embodiment of the invention and being able to reproduce a recording medium, any associated information about the image capture can be reproduced and output for display, i.e., the associated information can be reproduced and output with versatility. This enables the users to check about the image capture with the display of associated information no matter in what environment a recording medium recorded with captured images is reproduced so that the users' usability or others can be increased.

### BRIEF DESCRIPTION OF THE DRAWINGS

FIG. 1 is a block diagram showing an exemplary configuration of an image capture device in an embodiment of the invention;
FIG. 2 is a diagram showing the logic construction of data for recording on a DVD in accordance with a DVD-Video format;
FIG. 3 is a diagram showing the technical concept for combining, for display, image capture associated information with a captured image in the embodiment;
FIGS. 4A and 4B are both a diagram showing various display layouts of the image capture associated information by a sub picture in the embodiment;
FIG. 5 is a flowchart showing the process procedure by the image capture device of the embodiment for recording of the captured image;
FIG. 6 is a flowchart showing the process procedure for generation of recording data;
FIG. 7 is a flowchart showing the process procedure for acquisition of the captured image; and
FIG. 8 is a flowchart showing the process procedure for generation of the sub picture.

### DESCRIPTION OF THE MOST PREFERRED EMBODIMENT

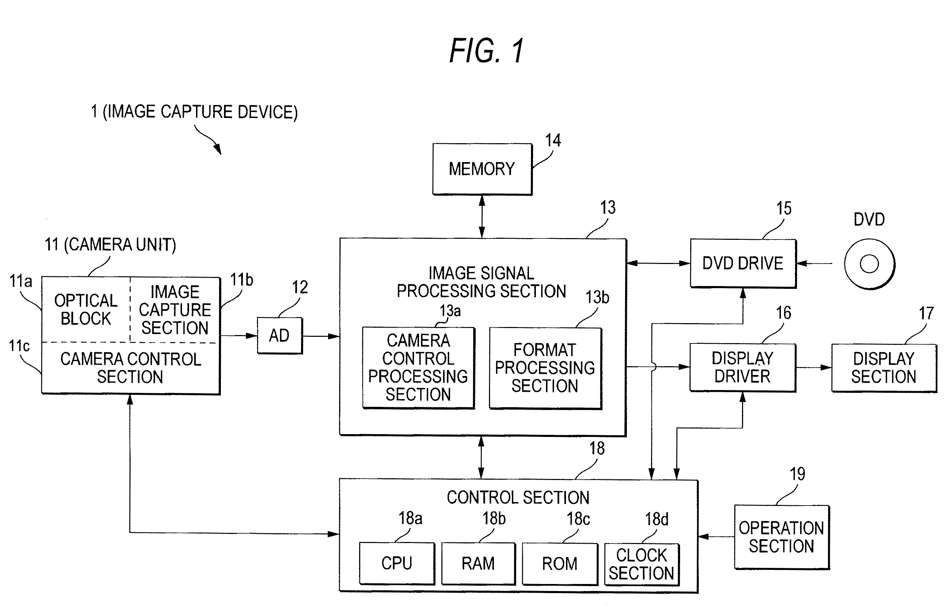

FIG. 1 shows an exemplary configuration of an image capture device in an embodiment of the invention.

In an image capture device 1 of FIG. 1, a camera unit 11 is configured to include an optical block 11a, an image capture section 11b, and a camera control section 11c.

The optical block 11a is configured to include a lens optical system, and mechanisms of focusing, shutter, iris, and others. The optical block 11a forms an image on the light-receiving surface of the image capture section 11b with an incoming light serving as image capture light. The optical block 11a exercises controls of focusing and shutter, and control over the iris value to be variable in response to a drive signal coming from the camera control section 11c in this example. That is, the camera control section 11c generates and outputs a drive signal for driving the mechanisms of focusing, shutter, iris, and others in response to the control exercised by the control section 18. In response to this drive signal, the mechanisms of focusing, shutter, and iris accordingly operate so that the focusing state, the shutter operation and speed, the iris value, and others can be controlled to be appropriate.

The image capture section 11b is configured to include an optical-electrical conversion element exemplified by CCD (Charge-Coupled Device) sensor or CMOS (Complementary Metal Oxide Semiconductor) sensor. The image capture section 11b applies optical-electrical conversion to the image capture light received by the light-receiving surface as above. The image capture section 11b sequentially outputs, with the proper timing, the signal charge accumulated by the image capture light received by the light-receiving surface so that an electric signal corresponding to the image capture light is output. The camera control section 11c generates a timing signal if needed for use depending on the control exercised by the control section 18, and outputs a drive signal to the image capture section 11b. The image capture section 11b outputs the signal charge with the timing in response to the drive signal.

To the electric signal provided by the component of the optical-electrical conversion element as above, the image capture section 11b executes processes of CDS (Correlated Double Sampling), AGC (Automatic Gain Control), and others. The process result is forwarded to an A/D (Analog/Digital) converter 12.

In the A/D converter 12, thus provided analog electric signal is converted into a digital signal.

The digital signal provided by the A/D converter 12 is corresponding to the image capture light, and is supplied to an image signal process section 13. The image signal process section 13 is configured as a DSP (Digital Signal Processor) for the image signal process, and goes through any required digital signal process, e.g., deriving a digital image signal corresponding to the captured image from the input digital signal. In the drawing, the component mainly serving the digital signal function for the image signal process section 13 is shown as a camera control process section 13a, and the component in charge of signal process for recording and reproduction in accordance with the DVD recording and reproducing format, which will be described later, is shown as a format process section 13b.

The camera control process section 13a mainly performs any required signal process based on various parameters set in relation to image capture for control over the camera unit 11. These image capture parameters for the camera control process section 13a include AF (Auto Focus) control, exposure control, white balance process, camera shake reduction, and others.

If with AF control, the camera control process section 13a performs signal process as below. Herein, AF control leads to automatic focus without being dependent on manual focus lens operation, and is assumed as being of contrast mode.

With the contrast mode, a focus lens is so controllably driven that an evaluation value is maximized. The evaluation value is the one generated based on a high-frequency component of a luminance signal in an image signal derived from the captured image. In the process corresponding to the AF control of the camera control process section 13a, a digital video signal generatedbased on the digital signal provided to the image signal process section 13 is subjected to extraction of a luminance signal component, and signal process is performed to generate an evaluation value from the luminance signal. The control section 18 then drives the focus lens in such a manner that the evaluation value is used as a basis to achieve image focus.

If for automatic exposure control as exposure control, based on the level of a luminance signal, i.e., the brightness, in an image signal derived from the captured image, the control section 18 sets the requirements for exposure, i.e., shutter speed and iris value. The camera unit 11 is then so controlled as to perform image capture based on the exposure requirements. If with automatic exposure control, the camera control process section 13a is so configured as to generate, for output, information about the luminance signal level for the setting of exposure requirements based on the image signal derived from the captured image.

As to white balance, a switching is made between an automatic control mode and a mode that is set depending on the neighboring environments, e.g., sunlight, fluorescent light, or bulb light. Based on the mode thus set for the white balance, the camera control process section 13a applies any required process to the digital image signal derived from the captured image in a manner suiting the white balance.

If with the process of using the captured image signal for camera shake reduction, as the process for the camera control process section 13a, a movement detection process is executed to the digital image signal derived based on the captured image. The movement detection result is forwarded to the control section 18. Based on the movement detection result, the control section 18 exercises control over the movement of the digital image signal in the horizontal and vertical directions for the aimof canceling the movement of the captured image as a result of camera shake. The digital image signal is the one derived based on the captured image.

The format process section 13b performs a digital signal process in accordance with the format for recording and reproducing moving image data for a DVD, which is a recording medium in the embodiment. The DVD for the image capture device 1 of this embodiment is of a recordable or rewritable type for data recording. If with a read-only DVD, the image capture device 1 of this embodiment can reproduce the DVD with its reproduction capability as long as the format of the DVD is conforming thereto. The DVD format conforming to the image capture device 1 of this embodiment includes DVD-Video, DVD-VR, and others. In the below, for convenience, the DVD format is presumed as being DVD-Video.

With the DVD format, the main image data (moving image data) and audio data are both compressed and encoded by MPEG.

For example, the format process section 13b compresses and encodes, by MPEG, the digital signal provided by the A/D converter 12 to the image signal process section 13. With the format of DVD-Video, the DVD can be recorded with the image data (sub image data) called sub picture together with the main image data. The sub picture is provided for the original purpose of adding auxiliary display to the main moving image data, and is used to additionally display subtitles to the moving images of a movie, for example. Such image data, i.e., sub picture, is generated and encoded also by the format process section 13b.

Using the main image data and sub picture through with compression and encoding as such, the format process section 13b can perform format conversion into stream data called MPEG-PS, for example. The resulting stream data is forwarded to a DVD drive 15.

After receiving the stream data from the format process section 13b in the image signal process section 13 as such, the DVD drive 15 performs data writing to the loaded DVD after the process of recording and encoding if required. As a result, the DVD is recorded with the image data derived by image capture.

For reproduction of the image data recorded on the DVD, the data reading is made from the DVD under the control of the control section 18 over the DVD drive 15. Thus read data is forwarded to the image signal process section 13.

In the image signal process section 13, the input data is subjected to a decoding process or others by the function component serving as the format process section 13b. The decodingprocess is corresponding to compression encoding, and a digital image signal is derived thereby for display. This digital image signal can be forwarded to a display driver 16. The display driver 16 drives a display section 17 for display based on thus input digital image signal. The display section 17 thus displays thereon the captured image reproduced from the DVD. Although not shown, alternatively, a digital image signal for display of a predetermined format may be output to the outside for image display by any external display device.

The image signal process section 13 can also take charge of signal process for displaying a monitor image on the display section 17 at the time of image capture. With this being the case, for example, a digital image signal derived based on the digital signal provided by the A/D converter 12 is output to the display driver 16.

Herein, the display device actually used as the display section 17 can vary in type, e.g., LCD (Liquid Crystal Display).

Prior to performing various types of signal process as such, the image signal process section 13 uses as a working area a memory 14, which is configured by an SDRAM, for example. For data writing/reading control over an SDRAM 3, a memory controller corresponding to an SDRAM 3 is in charge, which is equipped in the image signal process section 13.

The control section 18 is provided for exercising control over the components in the image capture device 1, and is configured as a microcomputer equipped with a CPU (Central Process Unit) 18a, a RAM (Random Access Memory) 18b, a ROM (Read Only Memory) 18c, and a clock section 18d.

The RAM 18b is mainly used as a working area for a CPU 18a, e. g. , temporarily storing the computation result of the CPU 18a. The ROM 18c stores therein a program for execution by the CPU 18a, the setting data for use for various types of processes, and the like. This program is written to the ROM 18c for storage therein when the image capture device 1 is manufactured, for example. Alternatively, the program may be stored in a removable recording medium, and data about the program may be installed from the removable recording medium to the ROM 18c for storage therein, for example. The ROM 18c may be a rewritable nonvolatile semiconductor memory element, e.g., EEPROM or flash memory.

The clock section 18d counts the time, and can output information about the current year, month, and day, the current day of week, the current time, and others.

An operation section 19 in such a case collectively includes an input operation unit disposed on the cabinet of the image capture device 1 at specific positions, e.g. , various operation members, touch panel, and others. The operation section 19 outputs, to the control section 18, an operation information signal based on the operation result. The CPU 18d in the control section 18 exercises any required control or executes any required processes based on the incoming operation information signal.

Note here that, at the time of image capture, the image capture device of a general type can record, as audio data, audio captured by a microphone or others together with the captured image data. Such audio data is recorded and reproduced with the temporal synchronization with the captured image data. In the actual image capture device 1 of this embodiment, the captured image data and the captured audio data are multiplexed on stream data for recording with synchronization established therebetween in terms of reproduction time. In FIG. 1, for brevity and convenience, the recording and reproduction system for the audio information is not shown. The recording and reproduction system for the actual audio information in the image capture device 1 of this embodiment may be applied with any well-known technique, which corresponds to the format of DVD-Video.

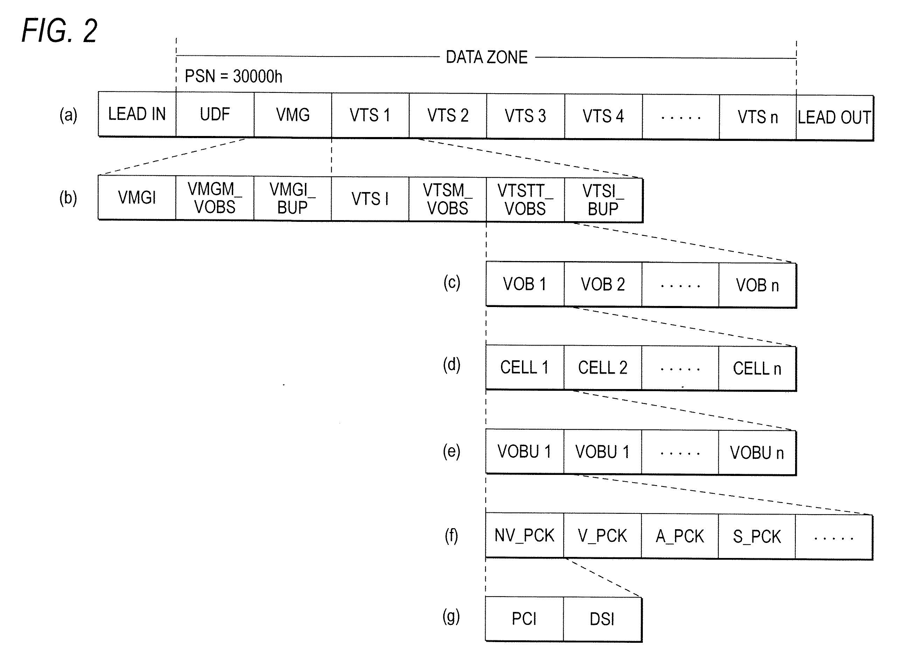

FIG. 2 shows the logic construction of data on a DVD conforming to the DVD-Video format.

First of all, as shown in (a) of FIG. 2, the recording area of a DVD is broadly divided into a lead-in area, a data zone area, and a lead-out area in this order from inward to outward. The data zone area is recorded with management information and data such as image data. The data zone area is physically started with an address of 30000h, where h denotes as being displayed in hexadecimal.

The data zone area is divided into a UDF (Universal Disc Format) area, a VMG (Video Manager) area, and a data area in this order from the side of the lead-in area. The data area is recorded with user data and beyond.

The UDF area is provided to make computer devices also accessible to the DVD with the support of UDF standard and ISO 9660 standard. The technology of such a file system is referred to as UDF bridge. The VMG area is recorded with management information about the disc in its entirety, and configures the table of contents for use to specify the titles found on the disc. As shown in (b) of FIG. 2, the VMG includes VMGI, VMGM_VOBS, VMGI_BUP, in this order.

The data area is recorded with user data as aforementioned, and data is recorded thereto by a unit corresponding to a title called VTS (Video Title Set), i.e., VTS1 to VTSn as shown in (a) of FIG. 2.

As shown in (b) of FIG. 2, a VTS is configured to include VTSI (Video Title Set Information), VTSM_VOBS (Video Object Set For the VTSM), VTSTT_VOBS (Video Object Set For Titles in a VTS), and VTSI_BUP (Backup of VTSI). The VOBSs are each defined by size to be smaller than 1 GB (gigabyte).

The VTSI stores therein the management information, e.g., recording position information or others for the image data. The VTSM_VOBS stores therein a route menu for the image data or others. This VTSM_VOBS is an option.

The VTSTT_VOBS is an area for storage of the actual data, e.g., a title.

The VTSI_BUP stores therein backup data of the VTSI.

The VTSTT_VOBS storing therein the actual data of a title is formed by coupling of units called VOBs, i.e., VOB1 to VOBn in (c) of FIG. 2. The number of the VOBs in one VTSTT_VOBS is 65535 or less. The VOB stores therein an MPEG-PS (Program Stream) including video data, audio data, image data of a sub picture (bit map), and navigation (NV) data, which are all compressed and encoded by MPEG2.

One VOB is configured by one or more Cells as shown in (d) of FIG. 2. This Cell is the basic unit for reproduction. The number of the Cells in one VOB is 255 or less. The Cell is configured by one or more VOBUs (Video Object Units) as shown in (e) of FIG. 2.

The VOBU is the minimum unit for access by the reproduction system for DVD-Video, and is generated with reference to the reproduction time of 0.4 to 1. 0 sec. Only the last VOBU is generated with reference to the reproduction time of 1.2 sec.

As shown in (f) of FIG. 2, the VOBU is a sequence including four packs of NV_PCK (Navigation Pack), V_PCK (Video Pack), A_PCK (Audio Pack), and S_PCK (Sub Picture Pack). One pack is 2048 bytes (corresponding to a sector), and in this example, is equivalent to 1 packet.

The reproduction system for DVD-Video is capable for variable bit rate and seamless reproduction. This means that there is a time shift between a reading signal by pickup access to the DVD and the video and audio data that are though with the decoding process. For solving the problem of such a reproduction time lag, and for achieving correct data reproduction, required is control information, which is the navigation data. The navigation data is defined to include PCI (Program Control Information), and DSI (Data Search Information). The PCI is the control information for use for real-time control, and the DSI is the control information about accesses. The NV_PCK is a pack for storing such navigation data, and as shown in (g) of FIG. 2, one NV_PCK is configured by a packet for storing the PCI, and a packet for storing the DSI, for example.

The V_PCK stores therein video (image) data that is compressed and encoded by MPEG2. The image data formed by coupling of data for storage into the V_PCK in one VOBU is presumed to include at least one GOP.

The A_PCK stores therein audio (voice) data that is compressed and encoded by MPFG2. The audio data formed by coupling of data for storage into the A_PCK in one VOBU is corresponding to the video data stored in the V_PCK in the same VOBU.

With the DVD-Video format, an image of the video data compressed and encoded by MPEG2 is the main image, and a sub picture is defined to serve as a sub image for the main image.

The video data serving as the main image here is corresponding to the compressed and encoded video data, which is stored in the V_PCK, and generally is the data for the moving image.

On the other hand, the image data being a sub picture is of a bitmap format, for example. When reproduced, the image data is ready for output in the display state that the moving main image of the video data is overlaid on (combined with) an image of the sub picture. That is, the sub picture is dealt as an image for additional and auxiliary display for the main image.

The S_PCK stores therein the data of the sub picture. The data of the sub picture formed by coupling of the data stored in the S_PCK in one VOBU is corresponding to the video data stored in the V_PCK in the same VOBU. The image contents of the sub picture can be changed (updated) with the minimum unit of a GOP. Accordingly, if the image contents of the sub picture are updated as the reproduction time elapses, the minimum timing for update is also corresponding to the unit of a GOP.

In the well-known manner, the sub picture is used for the function of displaying the subtitles in a DVD package medium such as movie. With such a DVD package medium, the images of a movie are dealt as the main image data under the DVD-Video format, and are recorded as compressed and encoded video data stored in the V_PCK. Together therewith, the image data of a bitmap format including the image contents for display of the subtitles is created, and the sub picture for display of the subtitles is recorded as data of the sub picture stored in the S_PCK.

For the reproduction system conforming to the DVD-Video format to reproduce the DVD recorded as such, executed is the video signal process of generating image data for reproduction display, i.e., the image data of the movie derived by decoding the video data extracted from the V_PCK is combined with the image data of the sub picture extracted from the S_PCK. Because the sub picture is updated by the unit of a GOP, the reproduction signal process may be so executed that the image data of a sub picture is combined to the image data of the main image every time a GOP is processed. This accordingly establishes synchronization between the image data of the main image and the image data of the sub picture in terms of reproduction time. As a result, the image to be reproduced and output is displayed with the subtitles as if overlaid on the images of the movie, and as the images of the movie change as the time elapses, the contents of the subtitles are also changed (updated).

With DVD software such as movies, as is well-known, the subtitles can be switched among various languages for reproduction. This means that, with the DVD format, the sub picture can be plurally provided for every function, for example. At the time of reproduction, among the sub pictures provided for each of the functions, one is selected for overlay on the main image for display.

As described above, the image capture devices often have the mechanism of recording the associated information (image capture associated information) on a recording medium together with a captured image, and at the time of reproduction, the associated information is displayed and output together with the captured image. Herein, the associated information is about image capture such as time and date of image capture, various parameters set in relation to image capture, and the like. The problem with such previous image capture devices is that, as already described, recording of the image capture associated information is the extension function of the recording format of the recording medium. Therefore, with the reproduction algorithm corresponding to the standard recording format, the image capture associated information cannot be reproduced and output. This is the reason why, when the image capture associated information is reproduced, it has been difficult to keep the compatibility among image capture devices of other manufacturers, or among other types of reproduction devices except the image capture devices.

According to the embodiment of the invention, there is provided the image capture device 1 with which the image capture associated information can be recorded on a recording medium (DVD). That is, if with a reproduction device conforming to the DVD format for use to reproduce the DVD recorded with the captured image recorded by the image capture device 1 of the embodiment, the image capture associated information is displayed together with the captured image, thereby leading to versatile display and output of the image capture associated information.

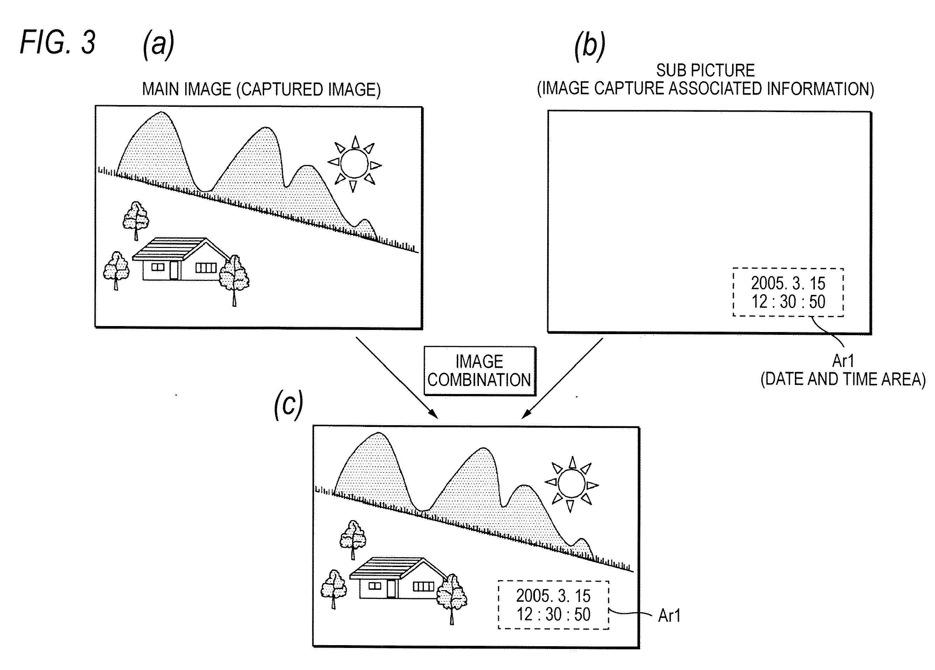

In the embodiment, attention is paid to a sub picture. As described by referring to FIG. 2, a sub picture can be normally included as N_PCK in the data construction of DVD-Video. As such, by including data of a sub picture in the data for recording to DVD-Video, the data of the sub picture can be reproduced from the DVD by any type of reproduction device as long as it is conforming to the DVD-Video format. The data of the sub picture can be then overlaid on (combined with) the image (main image) of the video data for output. Based thereon, in the embodiment, the sub picture is used for recording of the image capture associated information. This will be described by referring to FIG. 3.

In the image capture device 1 of the embodiment, the main image is a captured image as a result of image capture as shown in (a) of FIG. 3. The data corresponding to the captured image, i.e., main image, is the video data that is compressed and encoded by MPEG2, and is recorded on a DVD with a minimum unit of V_PCK as described above.

In FIG. 3, (b) shows the display contents of a sub picture to be overlaid, for display, on the main image currently displayed as shown in (a) of FIG. 3. The display contents of the sub picture in this case include a date and time area Ar1 in the lower right area on the screen. In this date and time area Ar1, displayed is the date and time (year, month, day, hour, minute, and second) when the captured image, i.e., main image, in (a) of FIG. 3 is actually captured. Such information about date and time indicates the date and time of image capture, and thus is considered as information related to image capture. That is, the information is the image capture associated information in this embodiment. With the image of the sub picture in (b) of FIG. 3, for easy perception by the users, the image capture associated information about the date and time is indicated mainly by numbers as the image contents.

As such, in this embodiment, the image capture associated information is created as the image contents of a sub picture for recording on a DVD.

In the above description, when the image capture device 1 of the embodiment records a captured image on a DVD, the captured image is recorded as video data, and the image capture associated information is recorded as data of a sub picture. When the DVD recorded as such is normally reproduced for display and output, as shown in (c) of FIG. 3, the captured image, i.e., main image, is displayed with, through overlay, the date and time area Ar1 being the image contents of the sub picture. Such display is possible with any type of reproduction device as long as it is conforming to the DVD-Video format in terms of reproduction. As such, in the embodiment, compatibility can be ensured with other types of devices in terms of reproduction of the image capture associated information recorded by the image capture device 1 onto a recording medium.

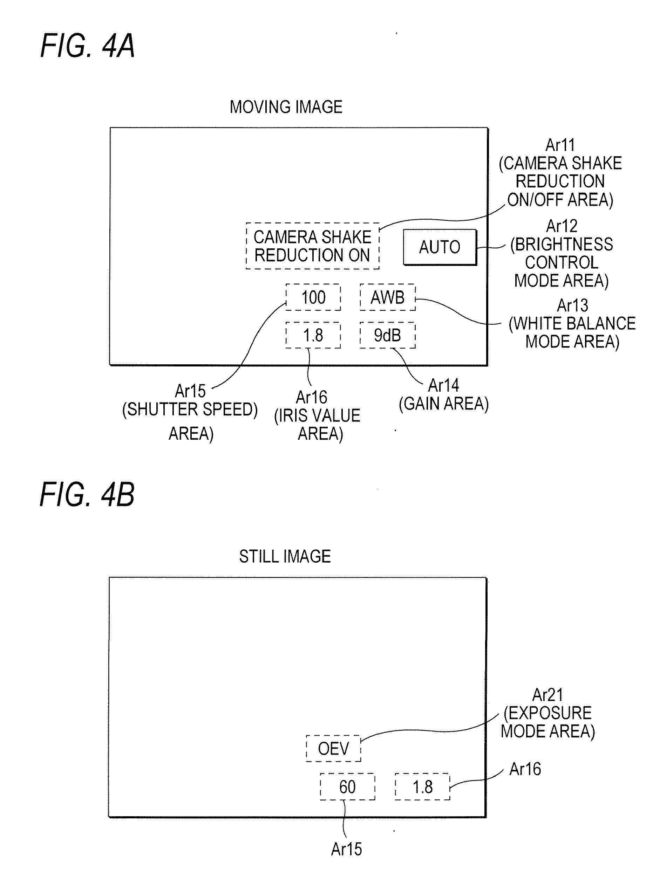

FIGS. 4A and 4B show the variations of a sub picture carrying therein the image contents of the image capture associated information.

FIG. 4A shows an exemplary displayed sub picture indicating, as the image capture associated information, the details of the various parameter settings in a case where a recorded captured image is a moving image.

In FIG. 4A, the sub picture displays therein various types of areas, i.e., a camera shake reduction ON/OFF area Ar11, a brightness control mode area Ar12, a white balance mode area Ar13, a gain area Ar14, a shutter speed area Ar15, and an iris value area Ar16.

The camera shake reduction ON/OFF area Ar11 is a display area indicating a parameter setting, i. e. , whether the camera shake reduction mode was ON or OFF when the main image, which is displayed together, was captured. The brightness control mode area Ar12 is a display area indicating the setting status of the brightness control mode at the time of image capture. In this example, the setting status is of an automatic control (AUTO) mode. The white balance mode area Ar13 is a display area indicating the control mode for the white balance at the time of image capture. The gain area Ar14 indicates the gain value of an image capture signal which is set at the time of image capture. The shutter speed area Ar15 indicates the shutter speed set at the time of image capture, and the iris value area Ar16 is a display area indicating the iris value that is set at the time of image capture.

FIG. 4B shows another exemplary displayed sub picture indicating, as the image capture associated information, the details of the various parameter settings in a case where a recorded captured image is a still image. In FIG. 4B, the sub picture displays therein an exposure mode area Ar21, the shutter speed area Ar15, and the iris value area Ar16. The exposure mode area Ar21 indicates the exposure control mode that is set at the time of image capture. In this drawing, the exposure control mode is of auto (OEV). The shutter speed area Ar15 and the iris value area AR16 are similar to those in FIG. 4A.

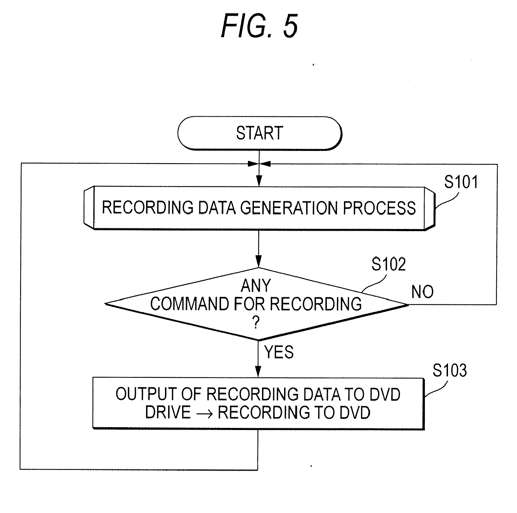

Described now is the process procedure for recording a captured image on a DVD in the image capture device 1 by referring to the flowcharts of FIGS. 5 to 8. Note here that the process procedures in these drawings are implemented by the CPU 18a in the control section 18 of FIG. 1, exercising control over the components through execution of a program stored in the ROM 18c, for example, and operating any predetermined function block of FIG. 1 in response to the control exercise.

With the image capture mode in which the image capture device 1 captures a captured image as recording data, the image capture device 1 goes through a process routine of FIG. 5, starting from step S101.

In step S101, executed is a process of generating recording data. This recording data is to be recorded on a DVD loaded to the DVD drive 15, i.e., MPEG2-PS in this embodiment. The MPEG2-PS includes the video data (main image data) as V_PCK, and the data of a sub picture as N_PCK. The video data is based on a signal of the image at least captured by the camera unit 11, and the sub picture data includes the image contents indicating the image capture associated information created in the manner that will be described later. That is, in step S101, as the recording data, generated is stream data of the logic construction of FIG. 2, i.e., stream data of a title.

In real world, together with the captured image, the recording data includes audio data, as A_PCK, based on the audio captured by a microphone or others. For convenience, no description is given to the audio data. In the embodiment, the audio data is recorded and reproduced with the normal process in accordance with the DVD-Video format.

In step S102, a determination is made whether a command is currently issued to make a recording to the DVD. If the determination result is negative as is determined that the operation to make a recording to the DVD is currently cancelled, the process of step S101 is continued. That is, when no recording is made to the DVD in the image capture mode, the process of generating the recording data is continued in step S101. Note here that the generated recording data is not recorded on the DVD, and the data is discarded after generated.

In this manner, the process of generating the recording data is continuously executed prior to the data recording to the DVD. This is aimed to start recording to the DVD with the timing responding to the operation to start the recording to the DVD. For example, if the process of generating the recording data is started in response to the operation to start data recording to the DVD, the DVD is resultantly recorded with images that are captured much later than the operation to start data recording. This is due to the time taken to start the signal process operation, or the time taken to generate, as recording data, a signal of the image captured by the camera unit 11.

When the determination result in step S102 is positive as is determined that the operation to start the data recording to the DVD is not yet cancelled, the procedure goes to step S103.

In step S103, the recording data generated in step S101 is transferred (output) to the DVD drive 15 under the control of the control section 18, for example, so that a command is issued to make a recording to the DVD. In response thereto, the DVD drive 15 goes through the process of recording and encoding for the recording data whatever appropriate to the DVD recording, for example, so that the DVD is recorded with the data. When the operation to start the data recording to the DVD is not yet cancelled, with the determination result of Yes in step S102, the recording data is continuously generated in step S101, and the DVD is continuously recorded with the recording data in step S103.

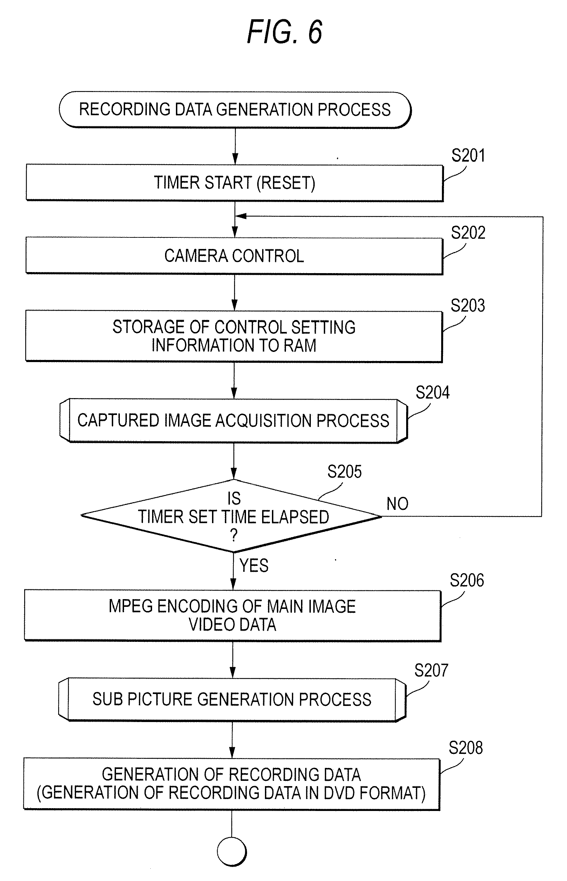

FIG. 6 is the flowchart showing the procedure of the recording data generation process, i.e., process in step S101 of FIG. 5.

As described in the foregoing, the image contents of a sub picture are updated with the unit of a GOP. In this case, the time taken for a GOP is constant, e.g., about 0.5 second. In step 5201 of FIG. 6, a timer is started to count the time needed for a GOP. When step S201 is executed for the second time or thereafter, corresponding to the process of step S101 for the second time or thereafter, the timer is reset to start counting the time. For the operation of the timer, for example, the CPU 18a uses the clock section 18d to make it start counting time as the timer.

In step S202, based on the various states of the signal of the currently captured image, various controls (camera controls) are exercised in relation to the image captured by the camera unit 11 to enable appropriate image capture. The control items here include auto focus control, exposure (shutter speed and iris) control, white balance, camera shake reduction control, and others. In this case, as described above, the camera control process section 13a in the image signal process section 13 takes charge of any required signal process.

Such camera controls are exercised after various types of parameters (control setting values) are set in value for control. For example, the control section 18b generates such control values for storage in a register and others. In this embodiment, as the process of step S203, information including such control setting values, i.e., control setting information, is stored for use as the image capture associated information.

In step S204, executed is the process of acquiring a captured image as a signal. Although the processes of steps S202 and S203 are actually executed simultaneously to the process of step S204, for convenience of description using the flowchart, the processes of steps S202 to S204 are described in order.

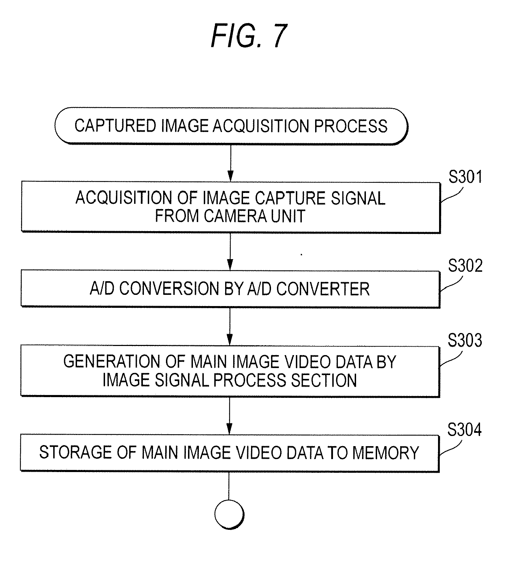

FIG. 7 is the flowchart showing the process procedure in step S204 of acquiring a captured image as a signal.

As described by referring to FIG. 1, the camera unit 11 generates an electric signal, i.e., image capture signal, corresponding to the captured image by the image capture section 11b. In step S301, the resulting image capture signal is acquired from the camera unit 11. In step S302, the acquired image capture signal is then forwarded to the A/D converter 12, and is converted therein into a digital signal.

In step S303, the image capture signal converted into the digital signal in step S302 is forwarded to the image signal process section 13. The digital signal is then subjected to a signal process by the format process section 13b in the image signal process section 13, and generates video data corresponding to the main image, i. e. , main image video data. Note here that the video data generated in this stage is of the data format being a digital video signal before compression encoding by MPEG2. In step S304, the main image video data is stored in the memory 14.

FIG. 6 is referred to again for description.

After step S204, i.e., after acquisition of an image capture signal and conversion into video data for storage, the procedure goes to step S205 to determine whether the time counted by the timer started and reset in step S201 elapses a predetermined setting time. When the determination result is negative, the procedure of steps S202, S203, and S204 is repeated. On the other hand, with the positive determination result in step S205, i.e., determined that the timer setting time is elapsed, the procedure goes to step S206 and onward.

The process procedure of steps S202, S203, and S204 is actually executed continuously and constantly in the image capture mode. However, for convenience of description using the flowchart, the processes of steps S202 to S204 are first described, and then the processes of step S206 and onward are described next.

In step S206, digital video data of the main image (captured image) so far accumulated in the memory 14 is acquired for a compression encoding process by MPEG2.

In step S207, a sub picture is generated. For generation of a sub picture, used is the signal process function provided to the format process section 13b in the image signal process section 13 specifically for a sub picture. There is also a possibility of generating a sub picture, which can offer a function other than indicating the image capture associated information in the embodiment. In the process of step S207, only a sub picture corresponding to the image capture associated information is assumed to be generated.

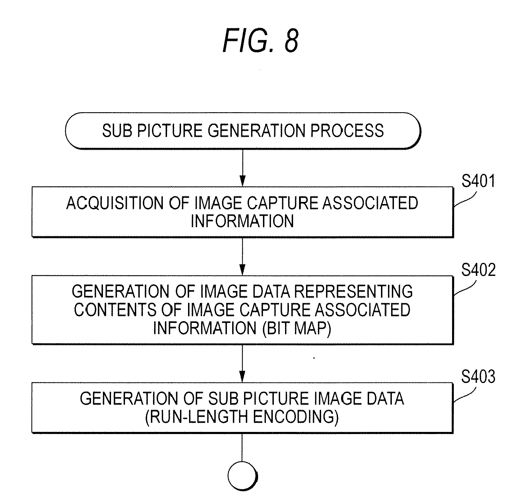

FIG. 8 is the flowchart showing the process procedure of generating a sub picture in step S207.

In FIG. 8, first of all, by the process of step S401, the image capture associated information is acquired. When a sub picture of the image capture associated information indicates only information about date and time as shown in (b) of FIG. 3, in step S401, the CPU 18a is so configured as to acquire information about the current date and time, which is counted by the clock section 18d.

When the sub picture of the image capture associated information mainly indicates the settings made about camera controls as shown in FIGS. 4A and 4B, for example, the control setting information that is supposed to be stored in the RAM 18b by the process of step S203 is read and acquired as the image capture associated information.

When the image capture associated information indicated by the sub picture needs to include both the date and time of the image capture and the settings made about camera control, a reading is made from the clock section 18d for the current date and time, and from the RAM 18b for the control setting information.

In step S402, executed is the process of generating an image data portion, which indicates the contents of the image capture associated information acquired in step S401. This procedure is implemented by cooperation between the control section 18 and the image signal process section 13, for example. In order to display the contents of the acquired image capture associated information as images that can be perceived by the users, the contents maybe requiredtobe letters (numbers included), patterns, and the like. For this purpose, the control section 18 exercises control over the image signal process section 13 in such a manner that the acquired image capture associated information is converted into text code information for specification of letters and patterns, and the image portion corresponding to the text code is generated in the bitmap format.

In step S403, using the image capture associated information generated in stepS402, image data is generated as a sub picture. Note here that, in this case, the image data being a sub picture in bitmap format is subjected to run-length encoding in a predetermined manner.

FIG. 6 is referred again for description.

After the image data of a sub picture is generated by the process of step S207, the procedure goes to step S208 to generate recording data. That is, using the video data of the captured image (main image) derived in step S206 byMPEG2 encoding, and the image data of the sub picture generated in step S207, the processes of packet division and multiplexing are executed. This accordingly generates the stream data, i.e., MPEG2-PS, being the recording data conforming to the DVD-Video format as described above. The stream data generated in step S208 is generated every time the timing of a GOP passes in step S205, and thus is of a GOP, for example.

As described above by referring to the flowcharts of FIGS. 5 to 8, the process of generating the recording data in step S101 of FIG. 5 is continuously executed in the image capture mode. FIG. 6 shows the process procedure in step S101. The process of step 5204 of FIG. 6 is also continuously executed in the image capture mode, i.e., process of acquiring a signal of the captured image from the camera unit, and storing the video data, i.e., main image, into the memory 14. This tells that the process of acquiring the captured image data is executed in real time with the lapse of time.

Moreover, the process of generating a sub picture carrying therein the display contents of the image capture associated information is shown as step S207 of FIG. 6, and thus is continuously executed in the image capture mode. Here, because the process of step S207 is executed every time a determination is made that the timing of a GOP comes in step S205, the process of generating a sub picture is continuously executed in the image capture mode, i.e., executed for every GOP.

Accordingly, as to the sub picture generated in step S207, when date and time is reflected as the image capture associated information as shown in (b) of FIG. 3, for example, every time the process of step S207 is executed, the date and time available at that time is acquired. The acquisition of date and time as such is corresponding to the timing of a GOP, e.g., about 0.5 second interval. Thereafter, the sub picture is so generated that the acquired date and time is reflected as the display contents. As a result, the date and time displayed in the sub picture generated in step S207 is updated with the lapse of image capture time.

The recording data generation process of FIG. 6 includes the procedure, i.e., steps S202 andS203, of camera controls, and storing the control values used for the camera controls, i.e., control setting information, is stored in the RAM. Generally, the processes relating to the camera controls, i.e., focus control, zoom control, and white balance setting, are constantly executed even during image capture. The control parameters change depending on the status of image capture, user operation, or others. Accordingly, in the image capture mode, if some change is observed to the camera controls variously exercised in step S202 of FIG. 6, the control setting information to be stored in the following step S203 is also changed in some predetermined items.

If the control setting information is included in the display contents of the image capture associated information in the sub picture generated in step S207, the control setting information acquired for creating the display contents of the image capture associated information in step S207 will be found as the latest in the RAM stored by the process of the lastly-executed step S203. As such, the contents of the control setting information indicated by the sub picture are also updated responsively to any change observed to the camera controls as the image capture proceeds.

As such, in this embodiment, the contents of the image capture associated information indicated as a sub picture can be updated appropriately as the image capture proceeds so that the function of recording and reproducing the image capture associated information can be practical for use.

Considered here is a case where the image capture associated information for use in the sub picture generation process of step S207 shows no change in contents similarly to the image capture associated information used to generate a sub picture in the last step S207. If this is the case, in this step 5207, the data of a sub picture generated in the last step S207 may be acquired as it is, and there is no specific need to newly generate a sub picture.

The sub picture generated in step S207 is not necessarily include the image capture associated information as the display contents, and may be generated for other functions. In an exemplary case where the image capture device 1 has a real-time editing function of enabling editing during image capture, a possible sub picture may display a user-input comment or others.

Described above is the case that data about a captured image, i.e., mainly a moving image, is captured for recording as video data. This is surely not restrictive, and the image capture device 1 of this embodiment may record a captured image as still image data for recording. With this being the case, if data about a main still image is recorded on a recording medium, the contents of the image capture associated information acquired corresponding to such main image data acquisition may be generated as a sub picture for recording together with the main image data. As such, as is acquired based on the captured image, the data about the main still image is acquired in real time similarly to the captured moving image, and the image capture associated information indicated in the corresponding sub picture has the contents related to when the still image is acquired.

For acquisition of main image data in real time, the captured image is used as a basis in this embodiment. Alternatively, data may be acquired over the network such as the Internet, LAN, and WAN, or via a data interface such as IEEE1394 or USB so that the main image data can be acquired in real time.

The DVD format is presumably used in the above embodiments. This is not restrictive, and if with a format for image recording and reproduction in which data of a sub image is normally defined to be recorded and reproduced correspondingly to image data of a main image, the invention is surely applicable with various types of format other than DVD.

The recording device and the image capture device according to embodiments of the invention are not restricted to portable video cameras and others, and the invention is surely applicable to general electronic devices equipped with an image capture function, e.g., cellular phones.

It should be understood by those skilled in the art that various modifications, combination, sub-combinations, and alterations may occur depending on design requirements and other factors insofar as they are within the scope of the appended claims or the equivalents thereof.

## Claims

1. A recording device (1), comprising:
main image data acquisition means (11) for acquiring main image data in real time;
sub image data generation means (13b) for generating sub image data, which can be recorded on a recording medium together with the main image data based on a predetermined rule using a predetermined format provided for recording of image data on the recording medium, and is the image data defined to be displayable through overlay on a display image as a reproduction result of the main image data;
associated information acquisition means (13b) for acquiring associated information of predetermined contents when the main image data acquisition means is acquiring the main image data;
sub image data generation control means (18) for exercising control over the sub image data generation means to generate the sub image data by which the contents of the associated information acquired by the associated information acquisition means are displayed in a predetermined layout; and
recording means (15) for recording on the recording medium, in accordance with the format, the main image data acquired by the main image data acquisition means and the sub image data generated by the sub image data generation means.

2. The recording device according to claim 1, wherein
the main image data is video data defined by a format for a digital versatile disc (DVD), and is recorded by compression encoding, and
the sub image data is data of a sub picture defined by the format for the DVD.

3. A recording method, comprising the steps of:
acquiring (5301) main image data in real time;
generating (5207) sub image data, which can be recorded on a recording medium together with the main image data based on a predetermined rule using a predetermined format provided for recording of image data on the recording medium, and is the image data defined to be displayable through overlay on a display image as a reproduction result of the main image data;
acquiring (5401) associated information of predetermined contents when the main image data is acquired in the main image data acquisition step;
exercising control over the sub image data generation step to generate the sub image data by which the contents of the associated information acquired in the associated information acquisition step are displayed in a predetermined layout; and
recording (5103) on the recording medium, in accordance with the format, the main image data acquired in the main image data acquisition step and the sub image data generated by the sub image data generation step.

4. An image capture device (1), comprising:
main image data acquisition means (13b) for acquiring in real time, as main image data, information about an image captured by image capture;
sub image data generation means (13b) for generating sub image data, which can be recorded on a recording medium together with the main image data based on a predetermined rule using a predetermined format provided for recording of data on the recording medium, and is image data defined to be displayable through overlay on a display image as a reproduction result of the main image data;
associated information acquisition means (13b) for acquiring associated information of predetermined contents when the main image data acquisition means is acquiring the main image data;
sub image data generation control means (18) for exercising control over the sub image data generation means to generate the sub image data by which the contents of the associated information acquired by the associated information acquisition means are displayed in a predetermined layout; and
recording means (15) for recording on the recording medium, in accordance with the format, the main image data acquired by the main image data acquisition means and the sub image data generated by the sub image data generation means.
